# EUROPEAN PATENT APPLICATION

(11) **EP 4 435 632 A1**
(43) Date of publication of application: **25.09.2024**
(21) Application number: 23194592.4
(22) Date of filing: 31.08.2023
(51) Int. Cl.: G06F 16/93

(54) **INFORMATION PROCESSING SYSTEM, PROGRAM, AND INFORMATION PROCESSING METHOD**

(30) Priority: 20.03.2023 JP 2023043942
(71) Applicant: FUJIFILM Business Innovation Corp., Minato-ku Tokyo (JP)
(72) Inventor: KUREBAYASHI, Makoto, Yokohamashi, Kanagawa (JP)
(74) Representative: Kurig, Thomas

(57) **Abstract**

An information processing system includes one or plural processors configured to acquire information for accessing a web page displayed in a case where an instruction for storing an electronic document is received, and store the acquired information for accessing the web page in association with the electronic document.

## Description

### BACKGROUND OF THE INVENTION

### (i) Field of the Invention

The present invention relates to an information processing system, a program, and an information processing method.

### (ii) Description of Related Art

In a case where an electronic document created by a user while referring to a web page is checked by the user or by another user, the user or the other user may want to refer to the web page referred to in creating the electronic document.

### SUMMARY OF THE INVENTION

However, in a case where the web page referred to in creating the electronic document is closed, the web page is searched for from scratch based on the content of the created electronic document, and this requires effort of the user.

An object of the present invention is to reduce time required for search, compared to the time in the case of searching for a web page referred to in creating an electronic document from scratch.

According to a first aspect of the present disclosure, there is provided an information processing system including one or a plurality of processors configured to acquire information for accessing a web page displayed in a case where an instruction for storing an electronic document is received, and store the acquired information for accessing the web page in association with the electronic document.

According to a second aspect of the present disclosure, there is provided the information processing system according to the first aspect, in which the one or the plurality of processors may be configured to display an object of the electronic document associated with information for accessing the electronic document and a link object associated with the information for accessing the web page in an identifiable aspect of a correspondence relationship between the object and the link object.

According to a third aspect of the present disclosure, there is provided the information processing system according to the second aspect, in which the one or the plurality of processors may be configured to display the link object in a superimposed manner on the object of the electronic document or near the object of the electronic document as the identifiable aspect of the correspondence relationship.

According to a fourth aspect of the present disclosure, there is provided the information processing system according to any one of the first to third aspects, in which the one or the plurality of processors may be configured to store an element constituting the electronic document and the information for accessing the web page in association with each other.

According to a fifth aspect of the present disclosure, there is provided the information processing system according to the fourth aspect, in which the one or the plurality of processors may be configured to store one or more elements designated by a user among a plurality of elements constituting the electronic document and the information for accessing the web page in association with each other.

According to a sixth aspect of the present disclosure, there is provided the information processing system according to the fifth aspect, in which the one or the plurality of processors may be configured to receive an operation of designating a region including at least the one or more elements among pages constituting the electronic document as an operation of designating the one or more elements.

According to a seventh aspect of the present disclosure, there is provided the information processing system according to the first aspect, in which the one or the plurality of processors may be configured to receive an instruction as to whether or not to associate the information for accessing the web page with one or more elements designated by a user among a plurality of elements constituting the electronic document.

According to an eighth aspect of the present disclosure, there is provided the information processing system according to the seventh aspect, in which the one or the plurality of processors may be configured to display the one or more elements and content of the web page and then receive the instruction as to whether or not to associate the information for accessing the web page with the one or more elements.

According to a ninth aspect of the present disclosure, there is provided the information processing system according to any one of the first to eighth aspects, in which the one or the plurality of processors may be configured to, in a case where an update of the web page is performed, display information related to the update of the web page on the electronic document.

According to a tenth aspect of the present disclosure, there is provided the information processing system according to the ninth aspect, in which the one or the plurality of processors may be configured to perform a control of causing a user to select whether to access the web page before the update or to access the web page after the update as the information related to the update of the web page.

According to an eleventh aspect of the present disclosure, there is provided the information processing system according to the tenth aspect, in which the one or the plurality of processors may be configured to display information obtained by comparing the web page before the update with the web page after the update as the information related to the update of the web page.

According to a twelfth aspect of the present disclosure, there is provided the information processing system according to any one of the first to eleventh aspects, in which the one or the plurality of processors may be configured to further acquire information for accessing a web page displayed during a predetermined period, and display the information for accessing the web page displayed in a case where the instruction for storing the electronic document is received, and the information for accessing the web page displayed during the predetermined period as candidates of information to be associated with the electronic document.

According to a thirteenth aspect of the present disclosure, there is provided the information processing system according to the twelfth aspect, in which the one or the plurality of processors may be configured to further acquire information for accessing a web page included in the electronic document, and display the information for accessing the web page displayed in a case where the instruction for storing the electronic document is received, the information for accessing the web page displayed during the predetermined period, and the information for accessing the web page included in the electronic document as the candidates of the information to be associated with the electronic document.

According to a fourteenth aspect of the present disclosure, there is provided a program causing a computer to implement a function of acquiring information for accessing a web page displayed in a case where an instruction for storing an electronic document is received, and a function of storing the acquired information for accessing the web page in association with the electronic document.

According to a fifteenth aspect of the present disclosure, there is provided an information processing method including acquiring information for accessing a web page displayed in a case where an instruction for storing an electronic document is received, and storing the acquired information for accessing the web page in association with the electronic document.

According to the first aspect of the present invention, the information for accessing the web page displayed in storing the electronic document and the electronic document are stored in association with each other. Thus, the web page can be easily specified from the electronic document.

According to the second aspect of the present invention, the object of the electronic document and the corresponding link object can be perceived at a glance.

According to the third aspect of the present invention, the object of the electronic document and the corresponding link object can be perceived at a glance.

According to the fourth aspect of the present invention, the information for accessing the web page can be associated in units of pages or texts constituting the electronic document. Thus, convenience of the user is improved.

According to the fifth aspect of the present invention, the user can associate the information for accessing the web page for each element designated by the user among the elements included in the electronic document. Thus, convenience of the user is improved.

According to the sixth aspect of the present invention, one or more elements to be associated with the information for accessing the web page can be selected by designating a region. Thus, operability of the user is improved.

According to the seventh aspect of the present invention, the user can select whether or not to associate the information for accessing the web page with the element of the electronic document. Thus, convenience of the user is improved.

According to the eighth aspect of the present invention, a preview screen of the element of the electronic document and of the associated web page is displayed before the element of the electronic document and the web page are associated with each other. Thus, unintended association can be prevented.

According to the ninth aspect of the present invention, a notification of the update of the web page associated with the electronic document is provided. Thus, the most recent information can be maintained.

According to the tenth aspect of the present invention, the user can select and access any of the web page before the update or the web page after the update. Thus, convenience of the user is improved.

According to the eleventh aspect of the present invention, the user can select an access destination based on the information obtained by comparing the web page before the update with the web page after the update. Thus, selection based on a difference can be performed, and convenience is improved.

According to the twelfth aspect of the present invention, not only the web page displayed in a case where the electronic document is stored but also the web page displayed in the past can be associated with the electronic document. Thus, convenience of the user is improved.

According to the thirteenth aspect of the present invention, not only the web page displayed in a case where the electronic document is stored but also the "information for accessing the web page" included in the electronic document can be associated with the electronic document. Thus, convenience of the user is improved.

According to the fourteenth aspect of the present invention, the information for accessing the web page displayed in storing the electronic document and the electronic document are stored in association with each other. Thus, the web page can be easily specified from the electronic document.

According to the fifteenth aspect of the present invention, the information for accessing the web page displayed in storing the electronic document and the electronic document are stored in association with each other. Thus, the web page can be easily specified from the electronic document.

### BRIEF DESCRIPTION OF THE DRAWINGS

Exemplary embodiment(s) of the present invention will be described in detail based on the following figures, wherein:
Fig. 1 is a diagram illustrating an example of an overall configuration of an information processing system to which the present exemplary embodiment is applied;
Fig. 2 is a diagram illustrating an example of a hardware configuration of a management server;
Fig. 3 is a diagram illustrating an example of a functional configuration of a control unit of the management server;
Fig. 4 is a diagram illustrating an example of a functional configuration of a control unit of a user terminal;
Fig. 5 is a flowchart illustrating an example of a flow of processing until storing a web page that is open in a case where an operation of storing an electronic document is performed, and an element of the electronic document in association with each other in processing of the management server;
Fig. 6 is a flowchart illustrating an example of a flow of processing in a case where the web page associated with the element of the electronic document is updated in the processing of the management server;
Fig. 7 is a diagram illustrating a specific example of the electronic document stored in a database by an input operation with respect to the user terminal and a URL of the web page open on the user terminal in a case where the electronic document is stored;
Fig. 8 is a diagram illustrating a specific example of an operation screen displayed on the user terminal in storing the element of the electronic document and the URL of the web page in association with each other;
Fig. 9 is a diagram illustrating a specific example of a screen on which a correspondence relationship between the element of the electronic document and the URL of the web page is visualized;
Figs. 10A to 10C are diagrams illustrating specific examples of a document object and a web link object: Fig. 10A is a diagram illustrating a specific example of the document object and the web link object displayed on the user terminal in an identifiable aspect of the correspondence relationship between the document object and the web link object, and Figs. 10B and 10C are diagrams illustrating specific examples of information displayed on the electronic document in a case where the web page associated with the electronic document is updated;
Fig. 11 is a diagram illustrating a specific example of the operation screen displayed in a case where the web page associated with the electronic document is updated and where an operation of opening the web page is performed;
Fig. 12 is a diagram illustrating a specific example of difference information displayed on the user terminal;
Fig. 13 is a diagram illustrating a specific example in the case of manually performing an operation of storing the web page in association with the electronic document; and
Fig. 14 is a diagram illustrating a specific example of candidates of the web page to be associated with the electronic document that are listed in a selectable aspect.

### DETAILED DESCRIPTION OF THE INVENTION

Hereinafter, exemplary embodiments of the present invention will be described in detail with reference to the accompanying drawings.

### [First Exemplary Embodiment]

### <Overall Configuration of Information Processing System>

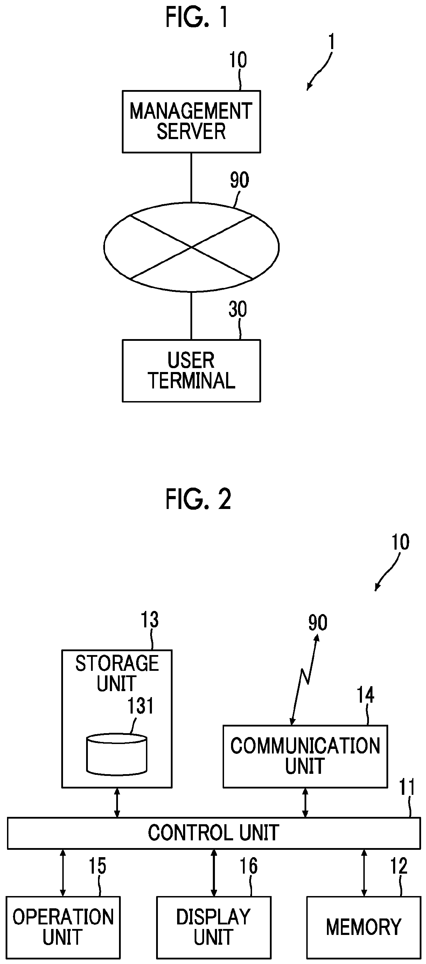

Fig. 1 is a diagram illustrating an example of an overall configuration of an information processing system 1 to which the present exemplary embodiment is applied.

The information processing system 1 is configured by connecting a management server 10 to a user terminal 30 via a network 90. The network 90 is, for example, a local area network (LAN) or the Internet.

### (Management Server)

The management server 10 constituting the information processing system 1 is an information processing apparatus as a server that manages the entire information processing system 1. The management server 10 performs processing of acquiring various types of information transmitted from each of the user terminal 30 and an outside, various types of processing with respect to the acquired various types of information, and processing of transmitting various types of information toward each of the user terminal 30 and the outside.

For example, the management server 10 acquires information for accessing a web page displayed on the user terminal 30 in a case where an instruction for storing an electronic document is received in the user terminal 30, and stores the acquired information for accessing the web page in association with the electronic document. Here, the "electronic document" is, for example, a document of a Word format. In addition, "displayed" includes not only being actually displayed on a screen but also an active state of being able to be displayed by an operation of switching between tabs. In addition, the "information for accessing the web page" is, for example, a uniform resource locator (URL). In the present exemplary embodiment, the URL as the "information for accessing the web page" is acquired.

In addition, in a case where an input operation for associating the URL of the web page with an element of the electronic document is received in the user terminal 30, the management server 10 acquires input information. Here, the "element of the electronic document" is text data, image data, or the like constituting the electronic document. The management server 10 stores the element of the electronic document and the URL of the web page specified from the acquired input information in association with each other.

The management server 10 performs a control of displaying an object (hereinafter, referred to as a "document object") of the electronic document associated with the stored information for accessing the electronic document on the user terminal 30. In addition, the management server 10 performs a control of displaying a link object (hereinafter, referred to as a "web link object") associated with the URL of the web page associated with the element of the electronic document on the user terminal 30.

Furthermore, the management server 10 performs a control of displaying the document object and the web link object on the user terminal 30 in an identifiable aspect of a correspondence relationship between the document object and the web link object. For example, the management server 10 performs a control of displaying the document object on which the web link object is superimposed on the user terminal 30 as the identifiable aspect of the correspondence relationship. In addition, for example, the management server 10 performs a control of displaying the web link object near the document object as the identifiable aspect of the correspondence relationship.

In addition, the management server 10 detects an update of the stored web page associated with the element of the electronic document and performs a control for displaying information indicating the update on the electronic document. In addition, the management server 10 performs a control of displaying a button for selecting the web pages before and after the update on the user terminal 30. Here, in a case where an input operation for selecting the web page before the update is performed, the management server 10 performs a control of displaying a stored image of the web page before the update on the user terminal 30. On the other hand, in a case where an input operation for selecting the web page after the update is performed, the management server 10 performs a control of displaying the current web page on the user terminal 30.

In addition, the management server 10 performs a control of displaying a button for displaying information (hereinafter, referred to as "difference information") related to a difference before and after the update obtained as a result of comparison between the web page before the update and the web page after the update on the user terminal 30. Here, in a case where an input operation for displaying the difference information is performed, the management server 10 performs a control of displaying the difference information on the user terminal 30. Details of the configuration and processing of the management server 10 will be described later.

### (User Terminal)

The user terminal 30 is an information processing apparatus such as a smartphone, a tablet terminal, or a personal computer operated by the user who uses the information processing system 1. The user terminal 30 performs processing of acquiring various types of information transmitted from each of the management server 10 and the outside, various types of processing with respect to the acquired various types of information, and processing of transmitting various types of information toward each of the management server 10 and the outside. For example, the user terminal 30 transmits input information input by the user toward each of the management server 10 and the outside. Details of the configuration and processing of the user terminal 30 will be described later.

The above configuration of the information processing system 1 is merely an example, and the information processing system 1 as a whole may have functions that realize the above processing. Thus, all or a part of the functions implementing the above processing may be shared or used in cooperation with each other in the information processing system 1. That is, all or a part of the functions of the management server 10 may be provided as functions of the user terminal 30, or all or a part of the functions of the user terminal 30 may be provided as functions of the management server 10. In addition, all or a part of the functions of each of the management server 10 and the user terminal 30 constituting the information processing system 1 may be transferred over to another server or the like, not illustrated, to perform all or a part of the above processing. Accordingly, the processing of the information processing system 1 as a whole may be accelerated, and the processing can also be complemented.

### <Hardware Configuration>

### (Hardware Configuration of Management Server)

Fig. 2 is a diagram illustrating an example of a hardware configuration of the management server 10.

The management server 10 includes a control unit 11, a memory 12, a storage unit 13, a communication unit 14, an operation unit 15, and a display unit 16. These units are connected to each other via a data bus, an address bus, a peripheral component interconnect (PCI) bus, or the like.

The control unit 11 is a processor that controls the functions of the management server 10 by executing various types of software such as an OS (basic software) and application software (software applications). The control unit 11 is configured with, for example, a central processing unit (CPU). The memory 12 is a storage region in which various types of software and data and the like used for executing the software are stored, and is used as a work area in operations. The memory 12 is configured with, for example, a random access memory (RAM).

The storage unit 13 is a storage region in which input data for various types of software, output data from various types of software, and the like are stored. The storage unit 13 is configured with, for example, a hard disk drive (HDD), a solid state drive (SSD), or a semiconductor memory used for storing programs, various types of setting data, and the like. A database that stores various types of information is stored in the storage unit 13.

The database stored in the storage unit 13 is a document DB 131 in which the electronic document is stored, or the like. The URL of the web page is associated with the electronic document stored in the document DB 131. Specifically, the URL of the web page is associated in units of elements such as the text data or the image data constituting the electronic document.

The communication unit 14 transmits and receives data to and from the user terminal 30 and the outside via the network 90. The operation unit 15 is configured with, for example, a keyboard, a mouse, a mechanical button, or a switch and receives an input operation. The operation unit 15 may include a touch sensor that is integrated with the display unit 16 to constitute a touch panel. The display unit 16 is configured with, for example, a liquid crystal display or an organic electro luminescence (EL) display used for displaying information and displays image (video and still image) data, text data, and the like.

### (Hardware Configuration of User Terminal)

A hardware configuration of the user terminal 30 has the same configuration as the hardware configuration of the management server 10 illustrated in Fig. 2. That is, the user terminal 30 includes each of a control unit, a memory, a storage unit, a communication unit, an operation unit, and a display unit having the same functions as each of the control unit 11, the memory 12, the storage unit 13, the communication unit 14, the operation unit 15, and the display unit 16 in Fig. 2 and will not be illustrated or described.

### <Functional Configuration>

### (Management Server)

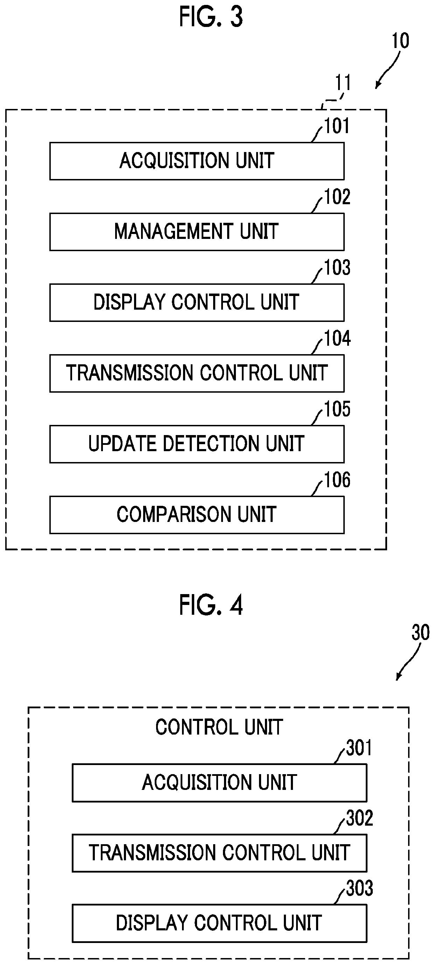

Fig. 3 is a diagram illustrating an example of a functional configuration of the control unit 11 of the management server 10.

An acquisition unit 101, a management unit 102, a display control unit 103, a transmission control unit 104, an update detection unit 105, and a comparison unit 106 function in the control unit 11 of the management server 10.

The acquisition unit 101 acquires various types of information. For example, the acquisition unit 101 acquires the URL as the information for accessing the web page. Specifically, the acquisition unit 101 acquires the URL of the web page that is specified from information input for storing the electronic document and that is displayed in a case where an input operation for storing the electronic document is performed.

In addition, the acquisition unit 101 acquires various types of information transmitted from each of the user terminal 30 and the outside. Examples of the information transmitted from the user terminal 30 in the information acquired by the acquisition unit 101 include the input information input by an operation of the user. The input information acquired by the acquisition unit 101 is, for example, information input for storing the electronic document, information input for associating the URL of the web page with the element of the electronic document, information input for selecting a version of the web page (for example, the web page before the update or the current web page after the update) to be displayed on the user terminal 30 in a case where the web page of the stored URL is updated, or information input for displaying the difference information obtained by comparing the web pages before and after the update.

The management unit 102 stores and manages various types of information in the database of the storage unit 13 (refer to Fig. 2). For example, the management unit 102 stores and manages the electronic document associated with the URL of the web page in units of elements such as the text data or the image data in the document DB 131.

The display control unit 103 performs a control for displaying various types of information on the display unit of the user terminal 30. Specifically, the display control unit 103 transmits control information for displaying various types of information toward the user terminal 30 via the transmission control unit 104, described later. The control information for displaying various types of information transmitted toward the user terminal 30 is, for example, control information for displaying the document object and the web link object, control information for displaying the document object and the web link object in the identifiable aspect of the correspondence relationship between the document object and the web link object, control information for displaying information indicating the update of the web page on the electronic document, control information for displaying the button for selecting the web pages before and after the update, control information for displaying the stored image of the web page before the update, control information for displaying the current web page after the update, or control information for displaying the difference information obtained by comparing the web pages before and after the update.

The transmission control unit 104 performs a control of transmitting various types of information via the communication unit 14 (refer to Fig. 2). Specifically, the transmission control unit 104 performs a control of transmitting various types of information toward each of the user terminal 30 and the outside. In the information of which transmission is controlled by the transmission control unit 104, the information transmitted toward the user terminal 30 is, for example, control information for displaying various types of information on the user terminal 30.

The update detection unit 105 detects the update of the web page associated with the element of the electronic document managed by the management unit 102. A method of detecting the update of the web page via the update detection unit 105 is not particularly limited. The update of the web page may be detected using an update monitoring tool or the like of the web page used in the related art.

The comparison unit 106 compares the web page before the update with the web page after the update for the web page of which the update is detected by the update detection unit 105. In addition, the comparison unit 106 extracts the difference information from the result of comparison between the web pages before and after the update. Here, a method of extracting the difference information by comparing the web pages before and after the update via the comparison unit 106 is not particularly limited. For example, in a case where the acquisition unit 101 acquires the URL of the web page, a snapshot including a captured image of content of the web page may be acquired at the identical time, and the difference information may be extracted by comparing content of the snapshot with content of the most recent web page.

### (User Terminal)

Fig. 4 is a diagram illustrating an example of a functional configuration of the control unit of the user terminal 30.

An acquisition unit 301, a transmission control unit 302, and a display control unit 303 function in the control unit of the user terminal 30.

The acquisition unit 301 acquires various types of information. Specifically, the acquisition unit 301 acquires input information input by the operation unit. In addition, the acquisition unit 301 acquires various types of information transmitted from the management server 10 and from the outside. In the information acquired by the acquisition unit 301, the information transmitted from the management server 10 is, for example, the control information for displaying various types of information on the display unit.

The transmission control unit 302 performs a control of transmitting various types of information via the communication unit. Specifically, the transmission control unit 302 performs a control of transmitting various types of information toward the management server 10 and toward the outside. In the information of which transmission is controlled by the transmission control unit 302, the information transmitted toward the management server 10 is, for example, various types of input information input via the operation unit.

The display control unit 303 performs a control for displaying various types of information on the display unit. For example, the display control unit 303 performs a control of displaying various types of information on the display unit based on the control information for displaying various types of information acquired by the acquisition unit 301.

### <Flow of Processing>

### (Flow of Processing of Management Server)

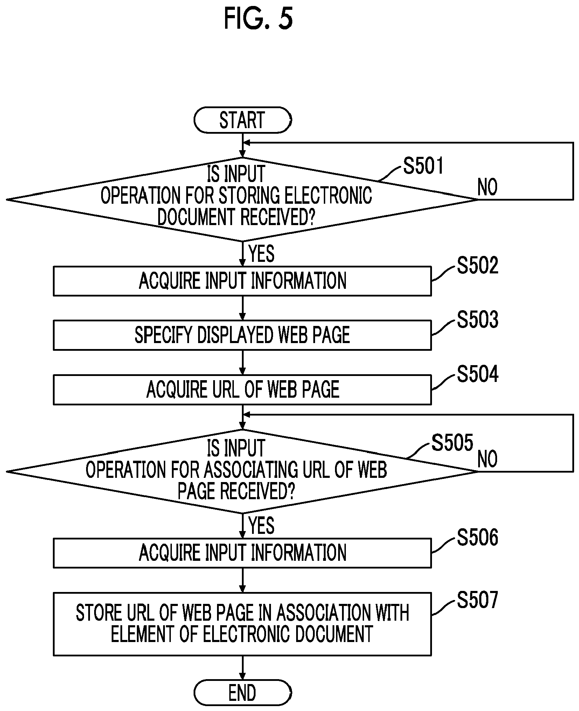

Fig. 5 is a flowchart illustrating an example of a flow of processing until storing the web page that is open in a case where an operation of storing the electronic document is performed, and the element of the electronic document in association with each other in the processing of the management server 10.

In a case where the input operation for storing the electronic document is received (YES in step S501), the management server 10 acquires the input information (step S502). In addition, the management server 10 specifies the web page displayed in a case where the input operation is performed (step S503) and acquires the URL as the information for accessing the specified web page (step S504). On the other hand, in a case where the input operation for storing the electronic document is not received (NO in step S501), the determination processing of step S501 is repeated until the input operation for storing the electronic document is received.

In a case where the input operation for associating the URL of the web page with the element of the electronic document is received (YES in step S505), the management server 10 acquires the input information (step S506). On the other hand, in a case where the input operation for associating the URL of the web page is not received (NO in step S505), the management server 10 repeats the determination processing of step S505 until the input operation for associating the URL of the web page is received.

The management server 10 stores the URL of the web page in association with the element of the electronic document (step S507). Specifically, the management server 10 stores and manages the URL of the web page acquired in step S504 in association with the element designated by the user among a plurality of elements constituting the electronic document in the document DB 131 of the storage unit 13. Here, "designated" includes an operation of designating a region in which one or more elements of pages constituting the electronic document are included.

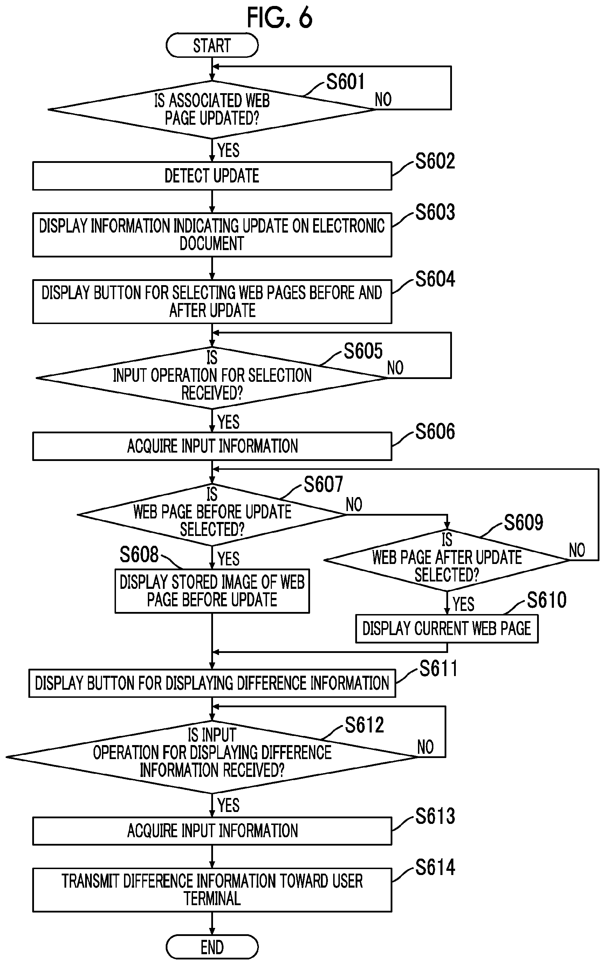

Fig. 6 is a flowchart illustrating an example of a flow of processing in a case where the web page associated with the element of the electronic document is updated in the processing of the management server 10.

In a case where the web page associated with the element of the electronic document is updated (YES in step S601), the management server 10 detects the update of the web page (step S602) and displays the information indicating the update of the web page on the electronic document (step S603). On the other hand, in a case where the web page associated with the element of the electronic document is not updated (NO in step S601), the management server 10 repeats the determination processing of step S601 until the web page associated with the element of the electronic document is updated.

The management server 10 displays the button for selecting the web pages before and after the update on the user terminal 30 (step S604). In a case where the input operation for selecting a target to be displayed is received (YES in step S605), the management server 10 acquires the input information (step S606) and transitions to determination processing of step S607. On the other hand, in a case where the input operation for selecting the target to be displayed is not received (NO in step S605), the management server 10 repeats the determination processing of step S605 until the input operation for selecting the target to be displayed is received.

In a case where the web page before the update is selected as the target to be displayed (YES in step S607), the management server 10 displays the stored image of the web page before the update on the user terminal 30 (step S608). On the other hand, in a case where the web page before the update is not selected (NO in step S607) and the web page after the update is selected (YES in step S609) as the target to be displayed, the management server 10 displays the current web page on the user terminal 30 (step S610). On the other hand, in a case where the web page after the update is not selected (NO in step S609), the management server 10 repeats the determination processing of step S607 and step S609.

In addition, the management server 10 displays a button for displaying the difference information obtained by comparing the web pages before and after the update (step S611). In a case where the input operation for displaying the difference information is received (YES in step S612), the management server 10 acquires the input information (step S613) and transmits the difference information toward the user terminal 30 (step S614). Consequently, the difference information is displayed on the display unit of the user terminal 30. On the other hand, in a case where the input operation for displaying the difference information is not received (NO in step S612), the determination processing of step S612 is repeated until the input operation for displaying the difference information is received.

### <Specific Example>

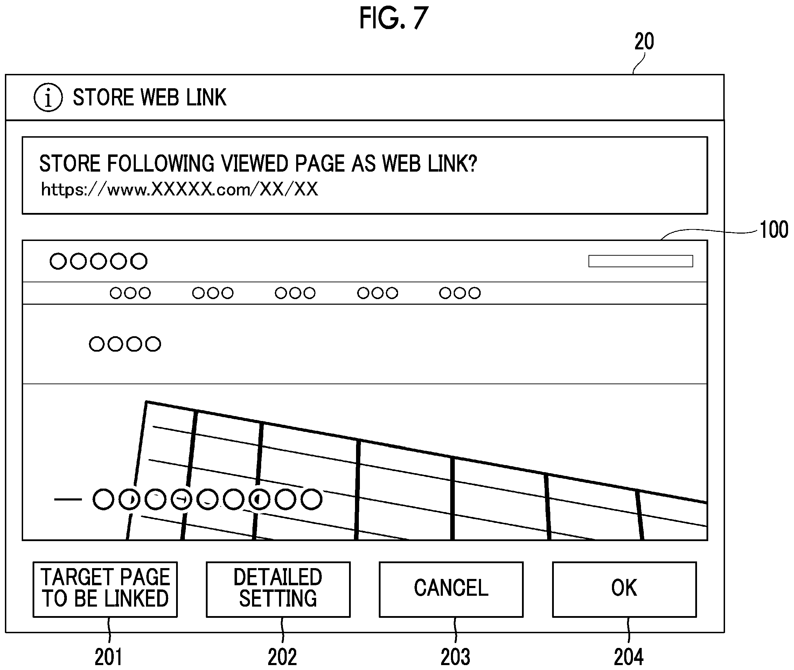

Fig. 7 is a diagram illustrating a specific example of the electronic document stored in the database by the input operation with respect to the user terminal 30 and the URL of the web page open on the user terminal 30 in a case where the electronic document is stored.

In a case where the user works by displaying the electronic document on the user terminal 30 and performs the operation for storing the electronic document, an operation screen 20 for selecting whether or not to store a web page 100 open on the user terminal 30 in a case where the operation for storage is performed in association with the electronic document is displayed.

The URL of the web page 100 as a target to be associated with the electronic document and the web page 100 are displayed on the operation screen 20 together with a message "store following viewed page as WEB link?". In addition, a button 201 described as "target page to be linked", a button 202 described as "detailed setting", a button 203 described as "cancel", and a button 204 described as "OK" are displayed on the operation screen 20.

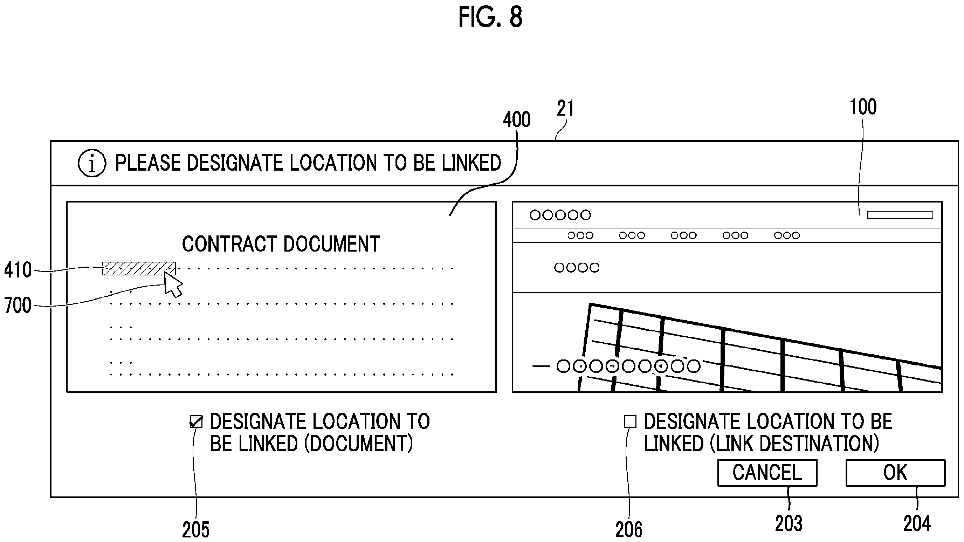

Here, in a case where the user presses the button 201, a designated page among one or more pages constituting the electronic document as a target to be stored and the URL of the web page 100 can be stored in association with each other. That is, association in units of pages of the electronic document can be performed. In addition, in a case where the user presses the button 202, an operation screen for storing one or more designated elements among the plurality of elements (text data or image data) included in the electronic document as the target to be stored and the URL of the web page 100 in association with each other is displayed. Specifically, an operation screen 21 illustrated in Fig. 8, described later, is displayed. In addition, in a case where the user presses the button 203, the operation of associating the URL of the web page 100 with the electronic document is canceled. In addition, in a case where the user presses the button 204, the operation of associating the URL of the web page 100 with the electronic document is executed.

Fig. 8 is a diagram illustrating a specific example of the operation screen displayed on the user terminal 30 in storing the element of the electronic document and the URL of the web page in association with each other.

In a case where the button 202 of the operation screen 20 illustrated in Fig. 7 is pressed, the operation screen 21 illustrated in Fig. 8 is displayed.

An electronic document 400 as the target to be stored and the web page 100 are displayed next to each other on the operation screen 21 together with a message "please designate location to be linked". In addition, a checkbox 205 described as "designate location to be linked (document)", a checkbox 206 described as "designate location to be linked (link destination)", the button 203 described as "cancel", and the button 204 described as "OK" are displayed on the operation screen 21.

Here, in a case where the user places a check in the checkbox 205, one or more elements of the electronic document 400 can be designated by selecting a text. In addition, in a case where the user places a check in the checkbox 206, one or more elements (for example, text data or image data) of the web page 100 can be designated by selecting a rectangular region including one or more elements. In the example in Fig. 8, a check is placed in the checkbox 205, and an element 410 is designated using a cursor 700. Specifically, the element 410 that is text data is designated by selecting a text. In addition, in a case where the user presses the button 203, the operation of associating the URL of the web page 100 with the element of the electronic document 400 is canceled, and the operation screen 21 is closed. In addition, in a case where the user presses the button 204, the correspondence relationship between the element of the electronic document 400 and the URL of the web page 100 is visualized.

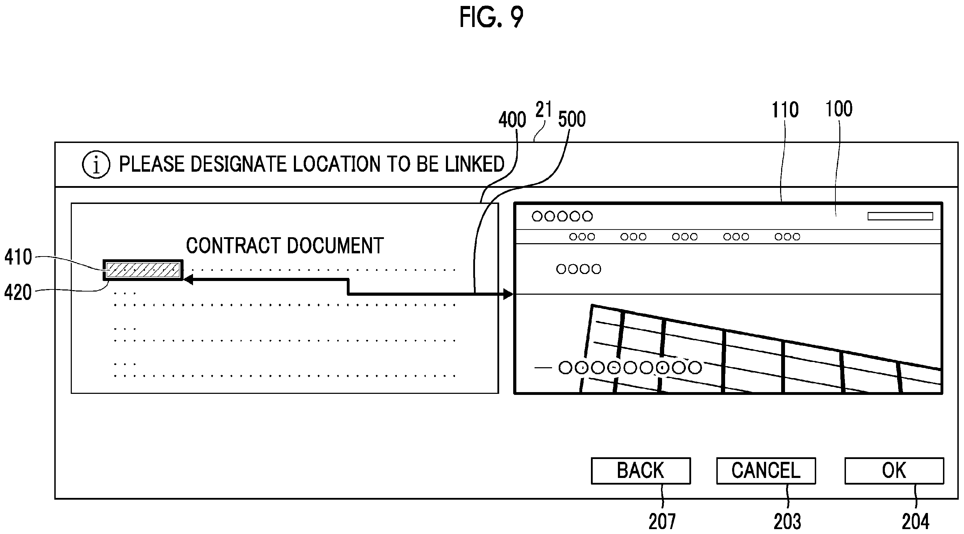

Fig. 9 is a diagram illustrating a specific example of the screen on which the correspondence relationship between the element of the electronic document and the URL of the web page is visualized.

In a case where the button 204 of the operation screen 21 illustrated in Fig. 8 is pressed, the correspondence relationship between the element of the electronic document and the URL of the web page is visualized as illustrated in Fig. 9.

A line 500 indicating the correspondence relationship between the element 410 of the electronic document 400 and the web page 100 associated with each other is displayed on the operation screen 21 together with a message "please check association". Furthermore, a frame 420 displaying the element 410 of the electronic document 400 in a highlighted manner and a frame 110 displaying the web page 100 in a highlighted manner are displayed. In addition, a button 207 described as "back", the button 203 described as "cancel", and the button 204 described as "OK" are displayed on the operation screen 21.

The user checks whether there is a problem in the correspondence relationship between the element of the electronic document 400 and the web page 100 associated with each other. In a case where a determination that there is a problem is made, the user presses the button 207 to go back to the previous screen (the screen illustrated in Fig. 8) and performs the association work again. On the other hand, in a case where a determination that there is no problem is made, the user presses the button 204 to confirm the association. In addition, in the case of canceling the operation of associating the URL of the web page 100 with the element of the electronic document 400, the user presses the button 203 to close the operation screen 21.

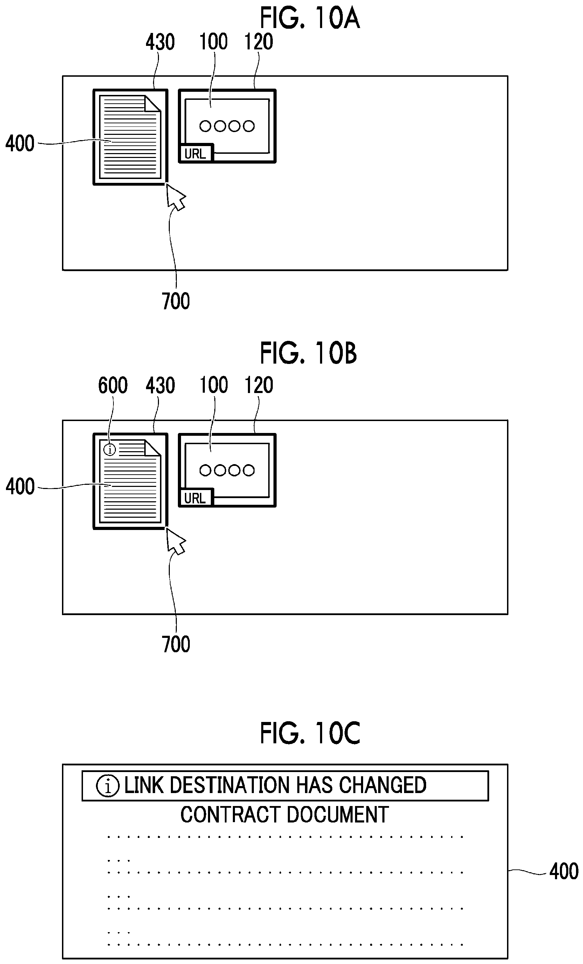

Figs. 10A to 10C are diagrams illustrating specific examples of the document object and the web link object. Fig. 10A is a diagram illustrating a specific example of the document object and the web link object displayed on the user terminal 30 in the identifiable aspect of the correspondence relationship between the document object and the web link object. Figs. 10B and 10C are diagrams illustrating specific examples of information displayed on the electronic document in a case where the web page associated with the electronic document is updated.

In a case where the electronic document and the web page are stored in association with each other, the document object and the web link object are displayed on the user terminal 30. Specifically, as illustrated in Fig. 10A, the electronic document 400 and the web page 100 are displayed in the identifiable aspect of the correspondence relationship between the electronic document 400 and the web page 100. Here, the "identifiable aspect" is not particularly limited and may be an aspect that can assist identification of the user viewing the user terminal 30. In the example in Fig. 10A, the link object of the web page 100 is displayed adjacent to the document object of the electronic document 400 as the "identifiable aspect". Furthermore, the document object of the electronic document 400 is displayed in a highlighted manner by a frame 430, and the link object of the web page 100 is displayed in a highlighted manner by a frame 120.

In a case where the web page is updated after the element of the electronic document and the web page are stored in association with each other, information indicating the update is displayed on the electronic document. For example, as illustrated in Fig. 10B, a mark 600 described as "i" representing the update is attached to the object of the electronic document 400 as the information indicating the update of the web page 100 associated with the electronic document 400.

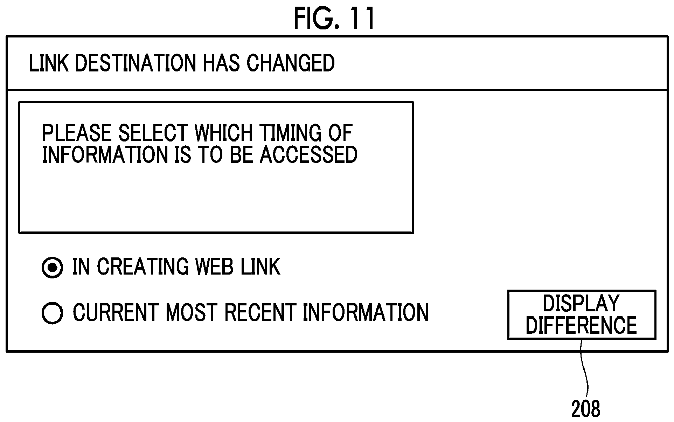

Here, in a case where the user performs an operation of designating the document object of the electronic document 400 using the cursor 700, the electronic document 400 is open as illustrated in Fig. 10C. On the open electronic document 400, a message described as "link destination has changed" is displayed as the information indicating the update of the web page in the correspondence relationship. In addition, in a case where the user performs an operation of designating the mark 600 or the link object of the web page 100 using the cursor 700, the operation screen illustrated in Fig. 11 is displayed.

Fig. 11 is a diagram illustrating a specific example of the operation screen displayed in a case where the web page associated with the electronic document is updated and where an operation of opening the web page is performed.

In a case where the operation of designating the mark 600 or the link object of the web page 100 illustrated in Figs. 10A to 10C is performed, an operation screen for requesting selection of the version of the web page to be displayed is displayed as illustrated in Fig. 11.

A message "please select which timing of information is to be accessed" and a selection button for selecting the version of the web page to be displayed are displayed on the operation screen illustrated in Fig. 11 together with a description "link destination has changed". The selection button for selecting the version of the web page to be displayed consists of a selection button described as "in creating WEB link" and a selection button described as "current most recent information".

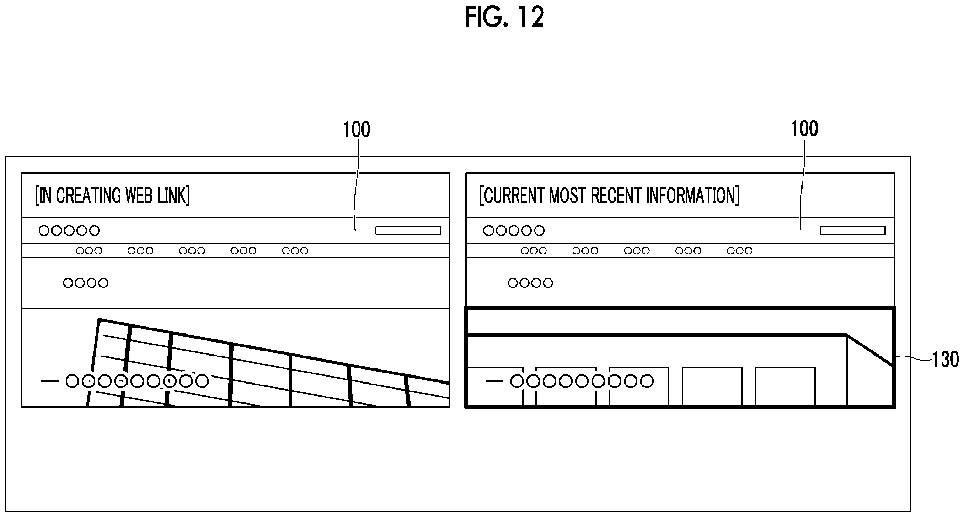

In a case where the selection button described as "in creating WEB link" is pressed out of the two selection buttons displayed on the operation screen, the stored image of the web page before the update is displayed. Specifically, the snapshot showing the content of the web page acquired in a case where the electronic document and the web page are associated with each other is displayed. On the other hand, in a case where the selection button described as "current most recent information" is pressed, the current web page after the update is displayed. Specifically, the URL of the web page associated with the electronic document is accessed, and the web page of the access destination is displayed. In addition, a button 208 described as "display difference" is displayed on the operation screen illustrated in Fig. 11. In a case where the button 208 is pressed, the screen illustrated in Fig. 12 is displayed.

Fig. 12 is a diagram illustrating a specific example of the difference information displayed on the user terminal 30.

In a case where the user presses the button 208 described as "display difference" illustrated in Fig. 11, the screen illustrated in Fig. 12 is displayed. The difference information obtained by comparing the content of the web page 100 before the update with the content of the web page 100 after the update is displayed on the screen illustrated in Fig. 12 in the identifiable aspect.

Specifically, the web page 100 before the update described as "in creating WEB link" and the current web page 100 after the update described as "current most recent information" are displayed in the state of being next to each other, and the difference information is displayed together in a highlighted manner. In the example in Fig. 12, a frame 130 for displaying an image of the current web page 100 after the update in a highlighted manner is attached to the image. That is, the difference information indicating the update of the image is extracted by comparing the content of the web page 100 before the update with the content of the web page 100 after the update, and the image is displayed in a highlighted manner.

### [Second Exemplary Embodiment]

In the first exemplary embodiment, in a case where the user performs the operation of storing the electronic document, the web page displayed at the moment is automatically specified, and the user selects whether or not to associate the web page with the electronic document. On the other hand, in a second exemplary embodiment, the user selects whether or not to store the web page in association with the electronic document in performing the operation of storing the electronic document. The user performs an operation for selecting one candidate from among candidates of the web page to be associated with the electronic document and for associating the candidate with the electronic document.

### <Configuration of Information Processing System and Hardware Configuration>

An overall configuration of the information processing system 1 according to the second exemplary embodiment and hardware configurations of the management server 10 and the user terminal 30 constituting the information processing system 1 are the same as the configurations according to the first exemplary embodiment and will not be illustrated or described.

### <Functional Configuration>

In the control unit 11 of the management server 10 constituting the information processing system 1 according to the second exemplary embodiment, the acquisition unit 101, the management unit 102, the display control unit 103, the transmission control unit 104, the update detection unit 105, and the comparison unit 106 illustrated in Fig. 3 function in the same manner as the first exemplary embodiment. However, in the functional configuration of the management server 10 constituting the information processing system 1 according to the second exemplary embodiment, the acquisition unit 101 and the display control unit 103 have the following configurations in addition to the configurations in the first exemplary embodiment.

That is, in addition to the configuration illustrated in Fig. 3, the acquisition unit 101 acquires the URL as the information for accessing the web page displayed on the user terminal 30 during a predetermined period. Here, the "predetermined period" refers to, for example, a predetermined period as a period dating back from the "present" that is a timing at which the operation of storing the electronic document is performed. For example, in a case where the "predetermined period" is three days, the URL of the web page displayed during a period from three days ago to the present (or currently displayed) on the user terminal 30 is acquired.

In addition, the acquisition unit 101 acquires the URL as the information for accessing the web page included in the electronic document as the target to be stored. That is, the element of the electronic document may include text data indicating the URL of the web page or image data such as a QR code (registered trademark) indicating the URL of the web page. The acquisition unit 101 specifies and acquires the URL of the web page from the element of the electronic document. Here, a method of specifying the URL of the web page from the element of the electronic document via the acquisition unit 101 is not particularly limited. For example, the URL included in the electronic document may be extracted in a case where a mouse-over operation with respect to the document object of the electronic document is performed.

In addition, the display control unit 103, in addition to the configuration illustrated in Fig. 3, performs a control for displaying the information for accessing the web page displayed in a case where an instruction for storing the electronic document is received, the information for accessing the web page displayed during the predetermined period, and the information for accessing the web page included in the electronic document as candidates of information to be associated with the electronic document.

### <Specific Example>

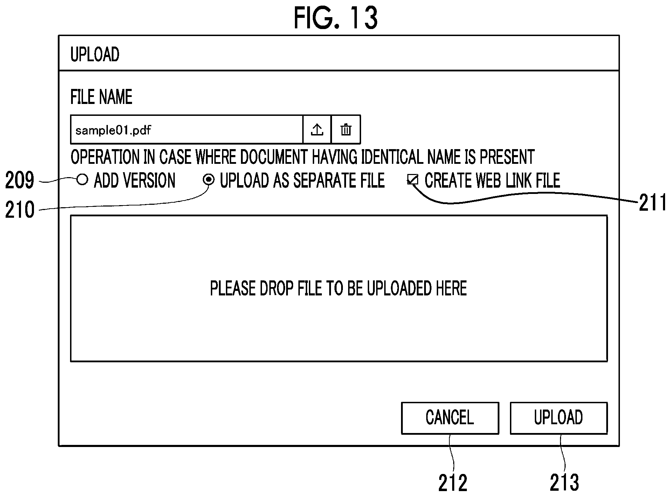

Fig. 13 is a diagram illustrating a specific example in the case of manually performing the operation of storing the web page in association with the electronic document. The operation of storing the electronic document in the example in Fig. 13 is an operation of uploading the electronic document to a cloud storage managed by the management server 10. The electronic document uploaded to the cloud storage managed by the management server 10 is stored and managed in the document DB 131 of the storage unit 13 of the management server 10.

In a case where the user performs the operation for storing the electronic document, the operation screen illustrated in Fig. 13 is displayed. The user designates the electronic document as the target to be stored on the operation screen illustrated in Fig. 13. In the example in Fig. 13, an electronic document having a file name "sample01.pdf' is designated as the electronic document as the target to be stored. An operation of designating the electronic document as the target to be stored is performed by any of an operation of directly inputting the file name or an operation of dropping the electronic document as the target to be stored into a region described as "please drop file to be uploaded here".

A selection button 209 described as "add version" and a selection button 210 described as "upload as separate file" are displayed on the operation screen illustrated in Fig. 13 together with a description "operation in case where document having identical name is present". That is, in a case where an electronic document having the identical file name to the electronic document designated as the target to be stored is already stored in the document DB 131, pressing the selection button 209 stores the electronic document as an electronic document that has the identical name and that is a different version from the already stored electronic document. In addition, pressing the selection button 210 stores the electronic document as another electronic document different from the already stored electronic document.

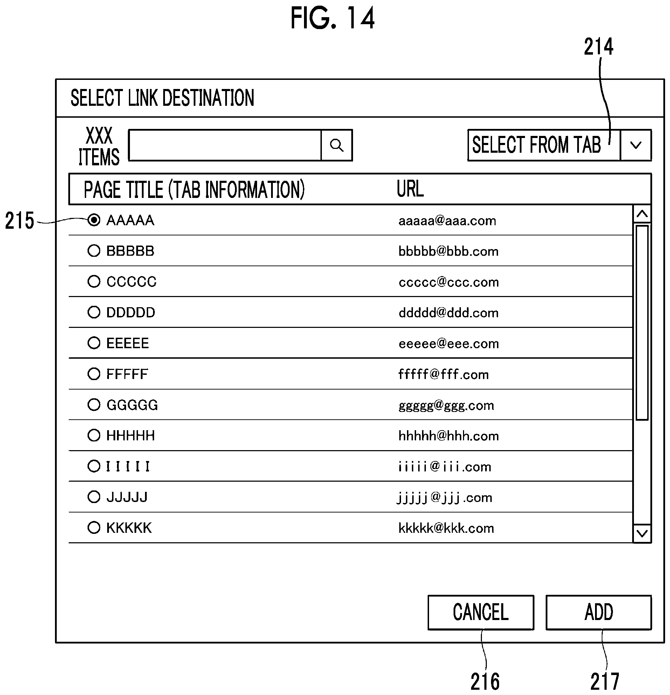

In the case of storing the web page in association with the electronic document, the user places a check in a checkbox 211 described as "create WEB link file" and presses a button 213 described as "upload". Then, the operation screen illustrated in Fig. 14 is displayed. In the case of canceling the operation of storing the electronic document, the user presses a button 212 described as "cancel".

Fig. 14 is a diagram illustrating a specific example of candidates of the web page to be associated with the electronic document that are listed in a selectable aspect.

In a case where the button 213 described as "upload" in Fig. 13 is pressed, a list on which the candidates of the web page to be associated with the electronic document are listed is displayed as illustrated in Fig. 14. The candidates of the web page include the web page displayed in a case where the operation of storing the electronic document is performed, the web page displayed on the user terminal 30 during the predetermined period, the web page included in the electronic document as the target to be stored, and the like.

The user displays the candidates of the web page to be associated with the electronic document in a list by selecting a display condition from a drop-down list 214. In the example in Fig. 14, the drop-down list 214 displays "select from tab". In this case, the web page displayed in a case where the operation of storing the electronic document is performed and the web page having a history of being open in the past are displayed in a list. An order of display in displaying the list is not particularly limited. For example, the list is displayed based on a date and time of opening or on the number of times of opening.

In addition, while illustration is not provided, the drop-down list 214 may include "all histories" for displaying all web pages displayed during the predetermined period in a list, "search by URL" for displaying web pages of URLs included in the electronic document in a list, and the like.

A selection button 215 is displayed for each of the candidates of the web page displayed in a list. The user presses the selection button 215 to select the web page. Here, while illustration is not provided, a preview of the web page may be displayed in a case where a mouse-over operation with respect to each field of the web pages displayed in a list is performed. The user presses the selection button 215 and then presses a button 217 described as "add". Accordingly, the web page selected using the selection button 215 is stored in association with the designated electronic document. In addition, in the case of canceling the operation of associating the web page with the electronic document, the user presses a button 216.

### [Other Exemplary Embodiments]

While the present exemplary embodiments have been described above, the present invention is not limited to the exemplary embodiments. In addition, effects of the present invention are not limited to the effects disclosed in the exemplary embodiments. For example, both of the configuration of the information processing system 1 illustrated in Fig. 1 and the hardware configuration of the management server 10 illustrated in Fig. 2 are merely examples for achieving the object of the present invention and are not particularly limited. In addition, the functional configuration of the management server 10 illustrated in Fig. 3 and the functional configuration of the user terminal 30 illustrated in Fig. 4 are merely examples and are not particularly limited. As long as the information processing system 1 in Fig. 1 is provided with a function with which the above processing can be executed as a whole, a functional configuration to be used to implement the function is not limited to the examples in Fig. 3 and Fig. 4.

In addition, the order of the steps of the processing of the management server 10 illustrated in Fig. 5 and Fig. 6 is merely an example and is not particularly limited. Not only the processing is performed in time series along the illustrated order of the steps, but also the processing may not be performed in time series and may be parallelly or individually performed. In addition, the specific examples illustrated in Fig. 7 to Fig. 14 are merely an example and are not particularly limited.

### Supplementary Note

(((1))) An information processing system comprising:
   one or a plurality of processors configured to:
   acquire information for accessing a web page displayed in a case where an instruction for storing an electronic document is received; and
   store the acquired information for accessing the web page in association with the electronic document.
(((2))) The information processing system according to (((1))), wherein the one or the plurality of processors are configured to:
   display an object of the electronic document associated with information for accessing the electronic document and a link object associated with the information for accessing the web page in an identifiable aspect of a correspondence relationship between the object and the link object.
(((3))) The information processing system according to (((2))), wherein the one or the plurality of processors are configured to:
   display the link object in a superimposed manner on the object of the electronic document or near the object of the electronic document as the identifiable aspect of the correspondence relationship.
(((4))) The information processing system according to any one of (((1))) to (((3))), wherein the one or the plurality of processors are configured to:
   store an element constituting the electronic document and the information for accessing the web page in association with each other.
(((5))) The information processing system according to (((4))), wherein the one or the plurality of processors are configured to:
   store one or more elements designated by a user among a plurality of elements constituting the electronic document and the information for accessing the web page in association with each other.
(((6))) The information processing system according to (((5))), wherein the one or the plurality of processors are configured to:
   receive an operation of designating a region including at least the one or more elements among pages constituting the electronic document as an operation of designating the one or more elements.
(((7))) The information processing system according to (((1))), wherein the one or the plurality of processors are configured to:
   receive an instruction as to whether or not to associate the information for accessing the web page with one or more elements designated by a user among a plurality of elements constituting the electronic document.
(((8))) The information processing system according to (((7))), wherein the one or the plurality of processors are configured to:
   display the one or more elements and content of the web page and then receive the instruction as to whether or not to associate the information for accessing the web page with the one or more elements.
(((9))) The information processing system according to any one of (((1))) to (((8))), wherein the one or the plurality of processors are configured to:
   in a case where an update of the web page is performed, display information related to the update of the web page on the electronic document.
(((10))) The information processing system according to (((9))), wherein the one or the plurality of processors are configured to:
   perform a control of causing a user to select whether to access the web page before the update or to access the web page after the update as the information related to the update of the web page.
(((11))) The information processing system according to (((10))), wherein the one or the plurality of processors are configured to:
   display information obtained by comparing the web page before the update with the web page after the update as the information related to the update of the web page.
(((12))) The information processing system according to any one of (((1))) to (((11))), wherein the one or the plurality of processors are configured to:
   further acquire information for accessing a web page displayed during a predetermined period; and
   display the information for accessing the web page displayed in a case where the instruction for storing the electronic document is received, and the information for accessing the web page displayed during the predetermined period as candidates of information to be associated with the electronic document.
(((13))) The information processing system according to (((12))), wherein the one or the plurality of processors are configured to:
   further acquire information for accessing a web page included in the electronic document; and
   display the information for accessing the web page displayed in a case where the instruction for storing the electronic document is received, the information for accessing the web page displayed during the predetermined period, and the information for accessing the web page included in the electronic document as the candidates of the information to be associated with the electronic document.
(((14))) A program causing a computer to implement:
   a function of acquiring information for accessing a web page displayed in a case where an instruction for storing an electronic document is received; and
   a function of storing the acquired information for accessing the web page in association with the electronic document.

According to the aspect of (((1))), the information for accessing the web page displayed in storing the electronic document and the electronic document are stored in association with each other. Thus, the web page can be easily specified from the electronic document.

According to the aspect of (((2))), the object of the electronic document and the corresponding link object can be perceived at a glance.

According to the aspect of (((3))), the object of the electronic document and the corresponding link object can be perceived at a glance.

According to the aspect of (((4))), the information for accessing the web page can be associated in units of pages or texts constituting the electronic document. Thus, convenience of the user is improved.

According to the aspect of (((5))), the user can associate the information for accessing the web page for each element designated by the user among the elements included in the electronic document. Thus, convenience of the user is improved.

According to the aspect of (((6))), one or more elements to be associated with the information for accessing the web page can be selected by designating a region. Thus, operability of the user is improved.

According to the aspect of (((7))), the user can select whether or not to associate the information for accessing the web page with the element of the electronic document. Thus, convenience of the user is improved.

According to the aspect of (((8))), a preview screen of the element of the electronic document and of the associated web page is displayed before the element of the electronic document and the web page are associated with each other. Thus, unintended association can be prevented.

According to the aspect of (((9))), a notification of the update of the web page associated with the electronic document is provided. Thus, the most recent information can be maintained.

According to the aspect of (((10))), the user can select and access any of the web page before the update or the web page after the update. Thus, convenience of the user is improved.

According to the aspect of (((11))), the user can select an access destination based on the information obtained by comparing the web page before the update with the web page after the update. Thus, selection based on a difference can be performed, and convenience is improved.

According to the aspect of (((12))), not only the web page displayed in a case where the electronic document is stored but also the web page displayed in the past can be associated with the electronic document. Thus, convenience of the user is improved.

According to the aspect of (((13))), not only the web page displayed in a case where the electronic document is stored but also the "information for accessing the web page" included in the electronic document can be associated with the electronic document. Thus, convenience of the user is improved.

According to the aspect of (((14))), the information for accessing the web page displayed in storing the electronic document and the electronic document are stored in association with each other. Thus, the web page can be easily specified from the electronic document.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
10: management server
11: control unit
30: user terminal
90: network
101: acquisition unit
102: management unit
103: display control unit
104: transmission control unit
105: update detection unit
106: comparison unit
301: acquisition unit
302: transmission control unit
303: display control unit

## Claims

1. An information processing system comprising:
one or a plurality of processors configured to:
acquire information for accessing a web page displayed in a case where an instruction for storing an electronic document is received; and
store the acquired information for accessing the web page in association with the electronic document.

2. The information processing system according to claim 1, wherein the one or the plurality of processors are configured to:
display an object of the electronic document associated with information for accessing the electronic document and a link object associated with the information for accessing the web page in an identifiable aspect of a correspondence relationship between the object and the link obj ect.

3. The information processing system according to claim 2, wherein the one or the plurality of processors are configured to:
display the link object in a superimposed manner on the object of the electronic document or near the object of the electronic document as the identifiable aspect of the correspondence relationship.

4. The information processing system according to any one of claims 1 to 3, wherein the one or the plurality of processors are configured to:
store an element constituting the electronic document and the information for accessing the web page in association with each other.

5. The information processing system according to claim 4, wherein the one or the plurality of processors are configured to:
store one or more elements designated by a user among a plurality of elements constituting the electronic document and the information for accessing the web page in association with each other.

6. The information processing system according to claim 5, wherein the one or the plurality of processors are configured to:
receive an operation of designating a region including at least the one or more elements among pages constituting the electronic document as an operation of designating the one or more elements.

7. The information processing system according to claim 1, wherein the one or the plurality of processors are configured to:
receive an instruction as to whether or not to associate the information for accessing the web page with one or more elements designated by a user among a plurality of elements constituting the electronic document.

8. The information processing system according to claim 7, wherein the one or the plurality of processors are configured to:
display the one or more elements and content of the web page and then receive the instruction as to whether or not to associate the information for accessing the web page with the one or more elements.

9. The information processing system according to any one of claims 1 to 8, wherein the one or the plurality of processors are configured to:
in a case where an update of the web page is performed, display information related to the update of the web page on the electronic document.

10. The information processing system according to claim 9, wherein the one or the plurality of processors are configured to:
perform a control of causing a user to select whether to access the web page before the update or to access the web page after the update as the information related to the update of the web page.

11. The information processing system according to claim 10, wherein the one or the plurality of processors are configured to:
display information obtained by comparing the web page before the update with the web page after the update as the information related to the update of the web page.

12. The information processing system according to any one of claims 1 to 11, wherein the one or the plurality of processors are configured to:
further acquire information for accessing a web page displayed during a predetermined period; and
display the information for accessing the web page displayed in a case where the instruction for storing the electronic document is received, and the information for accessing the web page displayed during the predetermined period as candidates of information to be associated with the electronic document.

13. The information processing system according to claim 12, wherein the one or the plurality of processors are configured to:
further acquire information for accessing a web page included in the electronic document; and
display the information for accessing the web page displayed in a case where the instruction for storing the electronic document is received, the information for accessing the web page displayed during the predetermined period, and the information for accessing the web page included in the electronic document as the candidates of the information to be associated with the electronic document.

14. A program causing a computer to implement:
a function of acquiring information for accessing a web page displayed in a case where an instruction for storing an electronic document is received; and
a function of storing the acquired information for accessing the web page in association with the electronic document.

15. An information processing method comprising:
acquiring information for accessing a web page displayed in a case where an instruction for storing an electronic document is received; and
storing the acquired information for accessing the web page in association with the electronic document.
